Europäisches Patentamt

European Patent Office

Office européen des brevets

(11) Publication number: **0 165 758**
**B1**

(12) **EUROPEAN PATENT SPECIFICATION**

(45) Date of publication of patent specification: **16.01.91**

(51) Int. Cl.⁵: **B 62 D 5/30**

(21) Application number: **85304141.6**

(22) Date of filing: **11.06.85**

(54) **Hydraulic power steering systems for motor vehicles.**

(30) Priority: **13.06.84 GB 8415023**

(43) Date of publication of application:
**27.12.85 Bulletin 85/52**

(45) Publication of the grant of the patent:
**16.01.91 Bulletin 91/03**

(84) Designated Contracting States:
**AT BE CH DE FR IT LI LU NL SE**

(56) References cited:
**GB-A-2 066 185**
**US-A-3 940 931**
**US-A-3 995 711**
**US-A-4 079 806**
**US-A-4 102 129**
**US-A-4 129 001**
**US-A-4 190 130**

(73) Proprietor: **STEERING DEVELOPMENTS
LIMITED**
**Unit 3, Eastman Way Hemel Hempstead
Herts HP2 7HF (GB)**

(72) Inventor: **Roake, Peter John**
**37a Ellingham Road**
**Hemel Hempstead Herts (GB)**
Inventor: **Mitchell, Gerald Edward**
**14 Neptune Drive**
**Hemel Hempstead Herts (GB)**

(74) Representative: **Sommerville, John Henry et al**
**SOMMERVILLE & RUSHTON 11 Holywell Hill
St. Albans Hertfordshire, AL1 1EZ (GB)**

**Description**

This invention relates to hydraulic power steering systems for motor vehicles as specified in the preamble of claim 1, for example as disclosed in US-A-3,995,711.

Conventional non-powered steering systems for road going motor vehicles comprise mechanical linkages between the steering wheel and the steerable road wheels, typically a rack and pinion transmission mechanism or similar, for converting rotational movement of the steering wheel into generally linear movement for operating steerable wheel links. Because the force needed by a driver to steer a motor vehicle through such mechanical linkages can, especially in the case of a heavy vehicle, be relatively high, it has been common to include in the steering arrangement supplementary hydraulic power assistance which acts on the steering linkage, for example the rack and pinion, together with the mechanically transmitted forces from the steering wheel and in accordance with rotation of the steering wheel to assist a driver in overcoming resistance to steer the steerable road wheels so that a driver need apply only a small amount of effort.

In such conventional power assisted systems, steering control is, of course, still possible in the event of hydraulic failure by virtue of the linkage present between the steering wheel and the steerable wheels.

In certain circumstances, particularly in the case of disabled or handicapped drivers, it may be that the degree of power assistance afforded by such systems is insufficient or it may be that the person's manual dexterity is such that operation of a conventional steering wheel is not possible. Accordingly, it is desirable in these circumstances to provide a steering system which may be operated to a greater extent, if not solely, by hydraulic power. A system in which movement of the steerable wheels is effected, for example, solely by hydraulic power enables a greater flexibility, firstly in siting the steering wheel, or an alternative control device, in relation to the road wheels and, secondly, in the installation of the system so that an individual's requirement can be accommodated conveniently.

However, there is a disadvantage in using a steering system whose operation depends exclusively, or at least to some extent, on hydraulic power to meet the demands of a physically disabled person which is that in the event of failure in the hydraulic pump or its driving means the steering arrangement can become inoperable or simply unusable by the disabled driver.

It is an object of the present invention therefore to provide a hydraulic steering system of a kind suitable for use in a motor vehicle to effect steering of steerable road wheels and which is dependent either solely or to a great extent upon hydraulic power, that, with the aforementioned disadvantage in mind, provides a greater degree of safety.

According to the present invention there is provided a hydraulic steering system for a motor vehicle, comprising hydraulic circuit means having a hydraulic motor whose output is to be operatively connected to a steering mechanism for a steerable wheel of the vehicle and driver operable control valve means for controlling supply of fluid to the hydraulic motor, a hydraulic pump for supplying pressure fluid to the circuit means and adapted to be driven by the vehicle engine, an auxiliary electric motor driven hydraulic pump operable to deliver pressure fluid to the circuit means, and electrical control means for controlling operation of the auxiliary pump which is arranged to energise the auxiliary pump in accordance with a predetermined low fluid pressure level from the engine driven pump being sensed by a pressure sensing device, the control means including time delay means adapted to be connected to the vehicle's ignition switch circuit, which is characterised in that the time delay means operates to inhibit energisation of the auxiliary pump by the control means during engine start-up for a predetermined time period following initial actuation of the vehicle's ignition switch.

In US-A-3,995,711 there is described a hydraulic steering system having an auxiliary electric motor driven pump and a control arrangement for the auxiliary pump which serves to prevent energisation of the auxiliary pump in differing ways according to the position of an ignition switch and includes a number of interconnected circuits. In this system one circuit introduces a time delay feature of around one third of a second only after starting of the engine following return of the ignition switch from its start to its ignition position and not when the switch is initially actuated. Such a system is comparatively complicated and expensive to produce.

Whilst the invention is aimed especially at vehicles for use by disabled persons, it can, in view of its safety aspects, be used advantageously in vehicles for use by any kind of driver. Also, the invention is not restricted to steering systems in which steering is effected solely by hydraulic power. Thus the steering system of the invention may be of a kind having a mechanical drive between the steering wheel and the steerable wheel linkage to increase its safety characteristics.

A hydraulic steering system in accordance with the present invention will now be described, by way of example, with reference to the accompanying drawings in which:

Figure 1 shows schematically the principal components of the system installed in a motor vehicle; and

Figure 2 illustrates a preferred form of the electrical circuit of the system of Figure 1.

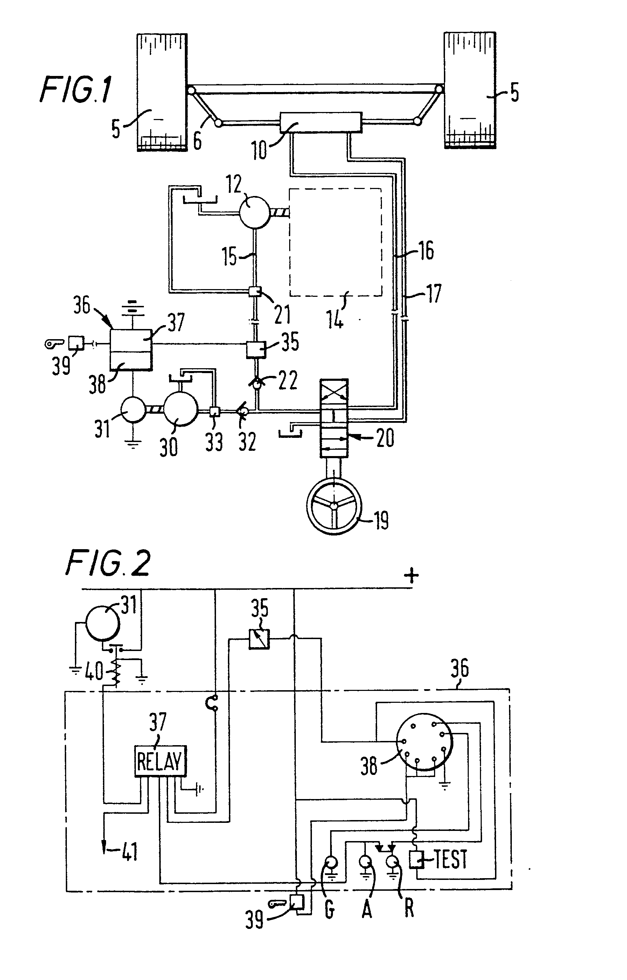

Referring to Figure 1 of the drawings, there is shown, schematically, two steerable road wheels 5 connected through mechanical linkage 6 to the output a hydraulic motor 10. In the particular case illustrated, the hydraulic motor 10 comprises a double acting ram having a piston disposed in a cylinder and coupled to a rack constituting the output of the motor such that operation of the motor causes reciprocal movement of the piston and thus the rack, this movement being transmitted through conventional linkage 6 to pivot the wheels 5. In this respect, the motor is generally similar to a conventional power-assisted steering rack except that there is no provision for mechanical input. The precise form of the steering linkage is not important; suffice it to say that operation of the hydraulic motor 10 causes pivotting of the steerable wheels and hence steering. It should be appreciated also that the arrangement is applicable to vehicles having only one, or more than two, steerable wheels and that more than one hydraulic motor may be provided, for example one for each steerable wheel, or even one for each sense of pivotal movement of each steerable wheel.

Pressurised hydraulic fluid is supplied to the hydraulic motor 10 from a primary circuit pump 12 driven mechanically by the vehicle's engine 14 either through a direct drive shaft or via two belts driven by the engine's crankshaft, the second belt providing backup in the event of failure of the first belt.

When the engine is running, hydraulic fluid is drawn from a reservoir and pumped under pressure by the pump 12 through hydraulic lines 15, 16 and 17 to one or the other side of the piston of motor 10 in dependence upon the position of a rotary control valve, shown schematically at 20, mechanically operated by the driver by means of a coupled steering wheel 19 or similar device, for example a lever. In its simplest form, the control valve 20 is a three way valve which, in its first position, delivers pressurised fluid along line 16 to one side of the piston of motor 10 whilst venting line 17 to drain so as to cause movement of the piston, and thus pivotting of the wheels in a first pivotal direction. In its second position, the valve delivers pressurised fluid to line 17 and opens line 16 to drain to cause pivotting of the wheels in the opposite pivotal direction. In its third, intermediate, position, the valve 20 connects the line 15 to both the lines 16 and 17 and also to the reservoir, thus effectively equalising the pressure acting on opposite sides of the piston of the motor 10 and allowing the steerable wheels 5 to return to their straight ahead position under the natural action of the steering linkage.

Excessive fluid pressure in line 15 is prevented by means of a pressure relief valve 21 connected to drain. A non-return valve 22 is also included in line 15 at a position adjacent the control valve 20.

The various hydraulic fluid lines, for example 15, 16 and 17, are provided by flexible pipes in order to permit a degree of freedom in siting the various components of the system, especially the control valve 20 and coupled steering wheel 19 which can, using flexible pipes, be located easily at any convenient position within the vehicle to suit the driver's requirement.

An auxiliary hydraulic pump 30 is, in accordance with the invention, included in the system to provide a secondary source of pressurised hydraulic fluid for the hydraulic motor for safety reasons in the event of failure of the primary pump 12 or the drive thereto. Referring now also to Figure 2, the auxiliary pump 30 is driven by an electric motor 31 which conveniently is supplied with electrical power from the vehicle's electrical system. The pump 30 is supplied with fluid from the reservoir and its output is connected to the line 15 and the input of control valve 20 via non-return valve 32 and pressure relief valve 33.

Disposed in the line 15, preferably at a position close to its junction with the output of pump 30, is an electrical pressure responsive device 35 connected through leads to an electrical control unit 36. The unit 36 includes a relay 37 which is operable in a manner which will be described to supply electrical power from the vehicle's electrical system to the electric motor 31. The unit 36 is also electrically connected to the vehicle's ignition switch and incorporates a time delay arrangement 38 whose function will become apparent.

The electrical pressure responsive device 35 comprises an electrical fluid pressure operated switch whose characteristics of operation are designed such that it is maintained open by expected levels of hydraulic fluid pressure in line 15 produced by normal operation of pump 12 but which closes upon that pressure attaining a predetermined minimum pressure level to provide in conjunction with the unit 36 a control signal in accordance therewith.

In normal operation of the steering system, the auxiliary pump 30 is unenergised and inoperative and pressurised hydraulic fluid for operation of the system is supplied by the primary, engine driven, pump 12.

In the event of either failure of pump 12 itself, failure of the pump's drive belts or other drive device, failure in the hydraulic lines up to and including line 15, or engine failure, the resulting reduction in hydraulic fluid pressure in line 15 to the aforementioned predetermined level or below, causes actuation of pressure responsive switch 35 from its open to its closed state. This in turn closes a circuit within the unit 36, as shown in Figure 2, to actuate the relay 37 contained therein and energise the electric motor 31 through an associated contactor 40. Almost instantaneously therefore auxiliary pump 30 is started to deliver pressurised fluid to maintain safe operation of the steering system. The unit 36 is arranged in addition to provide visual and audible indications of energisation of the auxiliary pump 30, by means of a red signal lamp and audible alarm referenced "R" and "A" respectively in Figure 2, so that the driver is aware that the back up system has been brought into operation. A further output 41 of the relay 37 may be coupled to the vehicle's hazard warning lamps for alerting the attention of other road users.

The aforementioned time delay arrangement 38 within the unit 36 is, in the particular form shown in Figure 2, constituted by an electromechanical time relay device such as that supplied by R.S. under the code number 349-951. Although only one time relay device is shown in Figure 2, the unit 36 may include two such devices connected in parallel for redundancy reasons. Alternatively, the time delay arrangement may be electronic incorporating two, parallel, solid state timing circuits operating in duplex fashion. The time delay arrangement 38 serves to prevent unwanted operation of the auxiliary pump 30 during routine start-up sequences of the vehicle's engine, and, to this end, is electrically connected to the vehicle's ignition switch, referenced at 39, so as to sense and respond to actuation of the ignition switch. When ignition switch 39 is actuated in order to start-up the engine, the time delay arrangement is immediately activated to prevent a control signal being supplied to the relay 37 in view of the closed state of the pressure responsive switch 35 during engine start-up and for a predetermined period of time following initial actuation of the ignition switch. Thus, for the duration of the time delay period, the unit 36 effectively ignores the state of switch 35. Upon completion of this period, the unit 36 is returned to normal operation so as, if necessary, to respond to switch 35 either being closed or subsequently closing, to energise motor 31. Hence, whilst the engine is being started, operation of the auxiliary pump 31 is inhibited. The time delay period extends from the instant of ignition switch actuation for a predetermined number of seconds thereafter, for example twenty, normally sufficient to allow the engine to be started and the primary pump 12 to reach its operating capacity. If at the end of this delay period, the fluid pressure sensed by switch 35 is less than the predetermined minimum, signifying, for example a failure of pump 12, the unit 36 brings auxiliary pump 31 into use automatically in the aforementioned manner.

During the start-up procedure, the previously mentioned red signal lamp "R" is illuminated for the duration of the time delay period. Following termination of this period, a green signal lamp, referenced "G" in Figure 2, is illuminated.

In the event where, for example, the pump 12 does not fail completely but rather develops a fault producing irregular fluctuations in its output, it is envisaged that the control unit 36 may include means, utilising for example the circuits of the time delay arrangement, to maintain the auxiliary pump 31 in operation for a certain time following actuation of switch 35 in order to avoid any undesirable rapid on/off operation thereof which might otherwise occur.

It will be appreciated that whilst in the arrangement described above steering of the steerable wheels is effected solely by means of hydraulic power, the steering system may, with, for example, appropriate modification to the rack and pinion, alternatively incorporate a mechanical transmission connecting the steering wheel with the steering linkage such that the system performs a power assistance function in a manner similar to conventional power assisted steering systems and with the benefit of its additional safety characteristics afforded by the provision of an auxiliary pump.

## Claims

1. A hydraulic steering system for a motor vehicle, comprising hydraulic circuit means having a hydraulic motor (10) whose output is to be operatively connected to a steering mechanism (6) for a steerable wheel (5) of the vehicle and driver operable control valve means (20) for controlling supply of fluid to the hydraulic motor, a hydraulic pump (12) for supplying pressure fluid to the circuit means and adapted to be driven by the vehicle engine (14), an auxiliary electric motor driven hydraulic pump (30, 31) operable to deliver pressure fluid to the circuit means, and electrical control means (36) for controlling operation of the auxiliary pump which is arranged to energise the auxiliary pump in accordance with a predetermined low fluid pressure level from the engine driven pump being sensed by a pressure sensing device (35), the electrical control means including time delay means (38) adapted to be connected to the vehicle's ignition switch circuit (39), characterised in that said time delay means operates to inhibit energisation of the auxiliary pump by the control means during engine start-up for a predetermined time period following initial actuation of the vehicle's ignition switch.

2. A hydraulic steering system according to Claim 1, characterised in that the outputs of the engine driven pump (12) and auxiliary pump (30) are connected to an input of the control valve means (20) through respective non-return valves (2, 32).

3. A hydraulic steering system according to Claim 2, characterised in that the pressure sensing device (35) is included in the fluid line (15) intermediate the output of the engine driven pump (12) and its respective non-return valve (22).

4. A hydraulic steering system according to any of the preceding claims, characterised in that fluid lines (15, 16, 17) connecting the output of the engine driven pump (12) to the control valve means (20) and the control valve means to the hydraulic motor (10) comprise flexible pipes.

5. A hydraulic steering system according to any one of the preceding claims, characterised in that the pressure sensing device (35) comprises an electrical switch operable in response to a predetermined fluid pressure level and connected to a circuit of the control means (36) including a relay (37) for controlling energisation of the electric motor (31) driving the auxiliary pump.

6. A hydraulic steering system according to Claim 5, characterised in that the control means (36) operates to maintain energisation of the auxiliary pump for a certain duration following operation of the pressure sensing switch.

7. A hydraulic steering system according to any one of the preceding claims, characterised in that the control means (36) includes indicator means (R.A) for indicating to the vehicle driver operation of the auxiliary pump.

**Patentansprüche**

1. Hydraulisches Steuersystem für ein Motorfahrzeug mit einem hydraulischen Kreis, der einen hydraulischen Motor (10) aufweist, dessen Ausgang mit einem Steuermechanismus (6) für ein steuerbares Rad des Fahrzeuges in Wirkverbindung bringbar ist, und mit einem vom Fahrer betätigbaren Regelventil (20) zum Regeln des Durchsatzes von Medium zum hydraulischen Motor, mit einer hydraulischen Pumpe (12), die dem Fördern von unter Druck stehenden Medium zu dem genannten Kreis dient und die von dem Fahrzeugmotor (14) antreibbar ist, mit einer durch einen Elektromotor angetriebenen hydraulischen Hilfspumpe (30, 31), die derart betätigbar ist, daß sie unter Druck stehendes Medium dem Kreis zuführt, und mit einer elektrischen Regeleinrichtung (36), die den Betrieb der Hilfspumpe regelt und die derart gestaltet und angeordnet ist, daß sie die Hilfspumpe aktiviert, und zwar in Abhängigkeit von einem vorgegebenen unteren Druckwert des Mediums von der motorbetriebenen Pumpe, erfaßt von einem Drucksensor (35), wobei die elektrische Regeleinrichtung eine Zeitverzögerungsschaltung (38) aufweist, die an den Zündschaltkreis (39) des Fahrzeugs angeschlossen ist, dadurch gekennzeichnet, daß die Zeitverzögerungsvorrichtung derart arbeitet, daß sie die Aktivierung der Hilfspumpe mittels der Regeleinrichtung während des Anfahrens des Motors über eine vorgegebene Zeitspanne verhindert, und zwar im Anschluß an die anfängliche Betätigung des Zündschalters des Fahrzeugs.

2. Hydraulisches Steuersystem nach Anspruch 1, dadurch gekennzeichnet, daß die Ausgänge der motorbetriebenen Pumpe (12) und der Hilfspumpe (30) an den Eingang des Regelventils (20) über entsprechende Rückschlagventile (2, 32) angeschlossen sind.

3. Hydraulisches Steuersystem nach Anspruch 2, dadurch gekennzeichnet, daß der Drucksensor (35) in der Leitung (15) des fließfähigen Mediums zwischen dem Ausgang der motorbetriebenen Pumpe (12) und deren entsprechendem Rückschlagventil (22) eingeschaltet ist.

4. Hydraulisches Steuersystem nach einem der vorausgegangenen Ansprüche, dadurch gekennzeichnet, daß die mediumführenden Leitungen (15, 16, 17), die den Ausgang der motorbetriebenen Pumpe (12) mit dem Regelventil (20) und dem Regelventil zum hydraulischen Motor (10) verbinden, flexible Leitungen umfassen.

5. Hydraulisches Steuersystem nach einem der vorausgegangenen Ansprüche, dadurch gekennzeichnet, daß der Drucksensor (35) einen elektrischen Schalter umfaßt, der in Abhängigkeit von einem vorgegebenen Druckwert des Mediums arbeitet und an einem Kreis des Reglers (36) angeschlossen ist, umfassend ein Relais (37) zum Regeln der Aktivierung des elektrischen Motors (31), der die Hilfspumpe antreibt.

6. Hydraulisches Steuersystem nach Anspruch 5, dadurch gekennzeichnet, daß der Regler (36) derart arbeitet, daß er eine Aktivierung der Hilfspumpe während einer gewissen Zeitspanne im Anschluß an den Betrieb des Drucksensorschalters aufrechterhält.

7. Hydraulisches Steuersystem nach einem der vorausgegangenen Ansprüche, dadurch gekennzeichnet, daß der Regler (36) einen Indikator (R.A) aufweist, um dem Fahrer den Betrieb der Hilfspumpe anzuzeigen.

**Revendications**

1. Système de direction hydraulique pour un véhicule à moteur, comprenant des circuits hydrauliques comportant un moteur hydraulique (10) pourvu d'une sortie reliée à un mécanisme de direction (6) d'une roue directrice (5) du véhicule et une soupape de commande (20) actionnée par le conducteur pour commander la distribution d'un fluide au moteur hydraulique, une pompe hydraulique (12) destinée à alimenter le circuit en fluide sous pression et agencée pour être entraînée par le moteur (14) du véhicule, une pompe hydraulique auxiliaire à entraînement par moteur électrique (30, 31) pour délivrer du fluide sous pression au circuit, et des moyens électriques de commande (36) destinés à commander le fonctionnement de la pompe auxiliaire et agencés pour activer cette pompe auxiliaire en fonction d'un niveau inférieur prédéterminé de la pression hydraulique fournie par la pompe entraînée par le moteur, ce niveau étant détecté par un dispositif capteur de pression (35), lesdits moyens électriques de commande comportant des moyens de temporisation (38) agencés pour être raccordés au circuit de contact d'allumage (39) du véhicule, caractérisé en ce que lesdits moyens de temporisation fonctionnent de manière à empêcher l'activation de la pompe auxiliaire par les moyens de commande lors du démarrage du moteur, pendant une durée prédéterminée qui suit l'actionnement initial du contact d'allumage du véhicule.

2. Système de direction hydraulique selon la revendication 1, caractérisé en ce que les sorties de la pompe entraînée par le moteur (12) et de la pompe auxiliaire (30) sont raccordées à une entrée de la soupape de commande (20) à travers des clapets anti-retour respectifs (2, 32).

3. Système de direction hydraulique selon la revendication 2, caractérisé en ce que le dispositif capteur de pression (35) est monté sur la conduite de fluide (15) reliant la sortie de la pompe entraînée par le moteur (12) au clapet anti-retour (22) de cette conduite.

4. Système de direction hydraulique selon l'une des revendications précédentes, caractérisé en ce que des conduites de fluide (15, 16, 17) reliant la sortie de la pompe entraînée par le moteur (12) à la soupape de commande (20) et la soupape de commande au moteur hydraulique (10) comportent des tuyaux flexibles.

5. Système de direction hydraulique selon l'une des revendications précédentes, caractérisé en ce que le dispositif capteur de pression (35) comporte un interrupteur électrique fonctionnant en réponse à un niveau prédéterminé de pression du fluide et raccordé à un circuit des moyens de commande (36) qui comporte un relais (37) commandant l'activation du moteur électrique (31) entraînant la pompe auxiliaire.

6. Système de direction hydraulique selon la revendication 5, caractérisé en ce que les moyens de commande (36) fonctionnent de manière à maintenir l'activation de la pompe auxiliaire pendant une certaine durée après l'actionnement de l'interrupteur du capteur de pression.

7. Système de direction hydraulique selon l'une des revendications précédentes, caractérisé en ce que les moyens de commande (36) comportent des indications (R, A) pour indiquer au conducteur du véhicule le fonctionnement de la pompe auxiliaire.

*FIG.1*

*FIG.2*

1